# EUROPÄISCHE PATENTSCHRIFT

(11) **EP 2 639 086 B1**
(45) Veröffentlichungstag und Bekanntmachung des Hinweises auf die Patenterteilung: **07.09.2016**
(21) Anmeldenummer: 13001277.6
(22) Anmeldetag: 13.03.2013
(51) Int. Cl.: B60D 1/06, B60D 1/28, B60D 1/36

(54) **Anhängerkupplung für ein Fahrzeug**
Trailer coupling for a vehicle
Attelage pour véhicule

(30) Priorität: 14.03.2012 DE 202012002539 U
(43) Veröffentlichungstag der Anmeldung: 18.09.2013
(73) Patentinhaber: Sauermann, Franz, 86558 Hohenwart-Freinhausen (DE)
(72) Erfinder: Sauermann Hans, 86558 Freinhausen (DE)
(74) Vertreter: TBK

(56) Entgegenhaltungen:
- EP-A1- 2 343 201
- US-A1- 2005 230 935

## Beschreibung

Die Erfindung betrifft eine Anhängerkupplung für ein Fahrzeug, insbesondere einen Ackerschlepper.

Aus der US 2005/230935 A1 ist eine gattungsgemäße Anhängerkupplung bekannt. Diese weist einen Kugelkopf auf, der eine Kugelkalotte einer Anhängerdeichsel aufnehmen kann. Der Kugelkopf ist an einem schwenkbaren Träger gehalten und zwischen einer Kuppelstellung und einer Lösestellung verstellbar. Die Verstellung selbst erfolgt dabei durch eine Nocke des Trägers, die von der Kugelkalotte beim Eindringen in ein Kupplungsmaul unter Mitnahme des Trägers verstellt wird. Diese Nocke besitzt eine konkave Krümmung, an die sich konvexe Kantenverrundungen ober-und unterseitig anschließen. Damit kann grundsätzlich eine automatische Ankupplung der Kugelkalotte realisiert werden. Diese Anhängerkupplung bildet den Ausgangspunkt der vorliegenden Erfindung.

Der Erfindung liegt die Aufgabe zugrunde, eine Anhängerkupplung der eingangs genannten Art zu schaffen, die sich durch eine hohe Zuverlässigkeit auszeichnet.

Diese Aufgabe wird erfindungsgemäß mit den Merkmalen des Patentanspruchs 1 gelöst.

Bei der Anhängerkupplung gemäß Anspruch 1 ist ein Kugelkopf als Kupplungsglied an einem verschwenkbaren Träger festgelegt, der vorzugsweise in einem Kupplungskopf verschwenkbar abgestützt ist. Dieser Träger ist mit einer Nocke fest verbunden, so dass die Nocke, der Träger und der Kugelkopf eine feste Einheit bilden. Alle drei Teile können damit nur zusammen verstellt werden. Die Nocke wird von einer Deichsel beim Einführen in das Kupplungsmaul betätigt, so dass der Träger und somit auch der Kugelkopf verstellt werden. Auf diese Weise wird der Kugelkopf von der Deichsel in die Kuppelstellung überführt. Damit ist diese Anhängerkupplung in der Lage, einen Anhänger beim Einführen der Deichsel in das Kupplungsmaul selbsttätig anzukuppeln, wobei der Verstellmechanismus für den Kugelkopf überraschend einfach ist. Es sind damit nur wenige Bauteile zum Aufbau der Kupplung erforderlich, von denen nur eines beweglich ist.

Es hat sich nun herausgestellt, dass bei dieser Kupplungsbauart die Funktion empfindlich von der Form der Nocke abhängt. Wenn man zusätzlich berücksichtigt, dass sowohl die Kugelkalotte als auch die Nocke im Betrieb einem gewissen Verschleiß unterliegen, führen die damit verbundenen Formänderungen im Betrieb zu Problemen. Entweder kuppelt die Kugelkalotte nicht richtig an den Kugelkopf an oder sie bleibt beim Versuch der Lösung der Verbindung hängen. Beides ist für den Betrieb höchst problematisch und muss daher vermieden werden. Es hat sich in vielen Versuchen herausgestellt, dass der gesamte Mechanismus weniger störanfällig ist, wenn der Krümmungsradius der Nocke im oberen Bereich größer als im unteren Bereich ist. Krümmungen der Nocke sind dabei konkar ausgesildet. Geringe Veränderungen der Nockenform oder der Form der Kugelkalotte werden in diesem Fall vom Mechanismus leichter toleriert. Damit ergibt sich eine automatisch kuppelnde Kugelkopf-Anhängerkupplung mit zuverlässiger Funktion, die auch dem rauen landwirtschaftlichen Betrieb gewachsen ist. Der Übergang zwischen dem Krümmungsradius der Nocke im oberen Bereich einerseits und dem Krümmungsradius der Nocke im unteren Bereich andererseits kann in beliebiger Weise gestaltet sein. Beispielsweise können die Krümmungen übergangslos ineinander überführen. In diesem Fall sind die Krümmungen vorzugsweise derart gestaltet, dass die Nockenneigung eine stetige Ortsfunktion ist, so dass keine den Mechanismus störenden Kanten innerhalb der relevanten Nockenfläche vorhanden sind. Alternativ können die Krümmungen auch durch einen oder mehrere Zwischenbereiche stufenweise ineinander übergehen. Schließlich ist auch daran gedacht, zwischen den beiden Krümmungen im oberen und unteren Bereich der Nocke einen Übergangsbogen - beispielsweise in Form einer Klotoide - vorzusehen. Hierdurch ergibt sich ein kontinuierlicher Übergang von der einen zur anderen Krümmung.

Für den Krümmungsradius der Nocke im unteren Bereich hat sich gemäß Anspruch 2 ein Wert bewährt, der in etwa dem Außenradius der Kugelkalotte entspricht. Damit ergibt sich im unteren Bereich nur noch eine äußerst geringe Abhängigkeit der Schwenklage des Trägers von der Lage der eindringenden Kugelkalotte. Dies macht den Gesamtmechanismus besonders unempfindlich gegenüber Fehlern in der Formgebung der Nocke. Der Begriff "in etwa" ist grundsätzlich dahingehend zu verstehen, dass bezüglich des Vergleichsmaßes eine Toleranz von +/- 10 % erlaubt ist.

Für den oberen Bereich der Nocke hat sich gemäß Anspruch 3 ein Krümmungsradius im Bereich des 1,5-fachen bis zum 2,5-fachen des Außenradius der Kugelkalotte bewährt. Auf diese Weise ergibt sich ein ausreichend großer Schwenkweg des Trägers beim Eindringen der Kugelkalotte, ohne eine übermäßige Toleranzanfälligkeit des Mechanismus in Kauf nehmen zu müssen.

Vorzugsweise beträgt der Krümmungsradius der Nocke im oberen Bereich in etwa dem Doppelten des Außenradius der Kugelkalotte. Diese Maßnahme liefert einen kompakten Aufbau bei hoher Zuverlässigkeit des Kupplungsmechanismus.

Alternativ oder zusätzlich kann die gestellte Aufgabe gemäß Anspruch 5 dadurch gelöst werden, dass die Krümmungsmittelpunkte des oberen und unteren Bereichs der Nocke - in Fahrtrichtung betrachtet - in der Kuppelstellung auf verschiedenen Seiten des Mittelpunkts des Kugelkopfs liegen. Auch auf diese Weise ergibt sich eine hohe Toleranz des Kupplungsmechanismus bezüglich Abweichungen in der Form der Nocke bzw. der Kugelkalotte.

Um ein Verklemmen der Kugelkalotte beim Entkuppeln sicher zu vermeiden, ist es gemäß Anspruch 6 vorteilhaft, wenn sich die Krümmungsmittelpunkte des unteren und/oder oberen Bereichs der Nocke in der Kuppelstellung oberhalb einer Horizontalebene durch den Mittelpunkt des Kugelkopfs befinden. Auf diese Weise ergibt sich eine günstige Nockenform, die leicht von der Kugelkalotte gelöst werden kann.

Alternativ oder zusätzlich ist es gemäß Anspruch 7 vorteilhaft, wenn die Schwenkachse des Trägers vom Mittelpunkt des Kugelkopfs einen Abstand aufweist, der zwischen dem 2,5-fachen und dem 3,5-fachen des Kugelkopfradius liegt. Im Stand der Technik wurde mit wesentlich größeren Abständen zwischen der Schwenkachse und dem Kugelkopfmittelpunkt gearbeitet. Dies ist auch nachvollziehbar, da ein großer Hebelabstand zwischen dem Kugelkopf und der Schwenkachse zu einer Linearisierung der Kugelkopfbewegung führt. Damit ist der gesamt Mechanismus einfacher zu entwickeln. Überraschenderweise hat sich hierdurch herausgestellt, dass ein kürzerer Abstand zwischen dem Kugelkopf und der Schwenkachse trotz der schwierigeren Bestimmung der Nockengeometrie im Ergebnis günstiger ist. Auf diese Weise ist der Mechanismus weniger anfällig gegenüber Veränderungen der Nockenform und damit weniger verschleißanfällig.

Vorzugsweise entspricht der Abstand des Kugelkopfmittelpunkts von der Schwenkachse gemäß Anspruch 8 in etwa dem Dreifachen des Kugelkopfradius. Bei diesem Wert wurde die geringste Störanfälligkeit des Mechanismus gegenüber Veränderungen der Nockengeometrie festgestellt.

Der Erfindungsgegenstand wird beispielhaft anhand der Zeichnung erläutert, ohne den Schutzumfang zu beschränken.

Es zeigt:
- Figur 1: eine geschnittene, räumliche Darstellung einer Anhängerkupplung in der Freigabestellung,
- Figur 2: die Darstellung gemäß Figur 1 in der Kuppelstellung und
- Figur 3: eine Seitenansicht des Trägers.

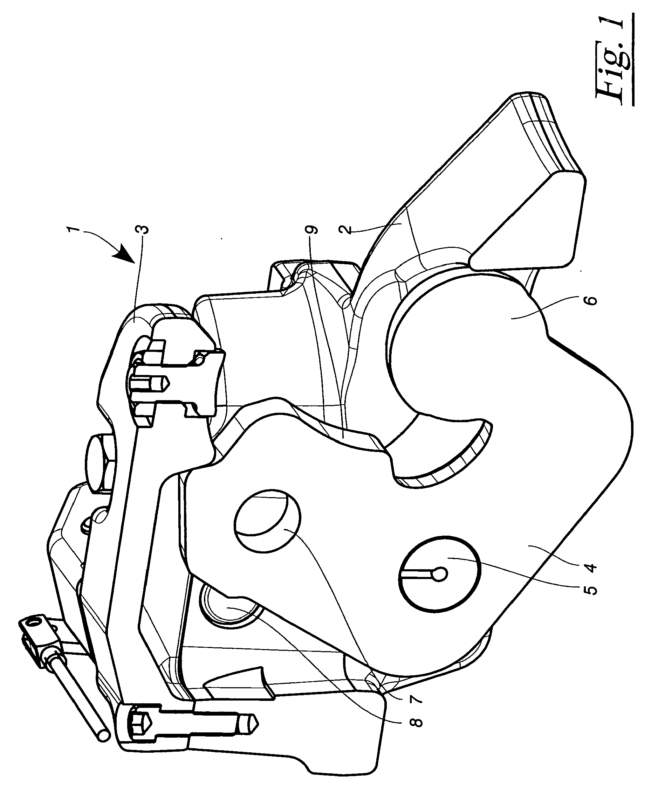

Die Figur 1 zeigt eine Anhängerkupplung 1 mit einem Kupplungsmaul 2 und einem Kupplungskopf 3. Am Kupplungsmaul 2 ist eine Einführschräge für eine nicht dargestellte Kugelkalotte einer Anhängerdeichsel vorgesehen. Hierdurch wird die Kugelkalotte in das Zentrum des Kupplungsmauls 2 geführt.

Im Kupplungskopf 3 ist ein Träger 4 um eine Schwenkachse 5 verschwenkbar abgestützt. Dieser Träger 4 weist einen Kugelkopf 6 auf, der zur Verbindung mit der nicht dargestellten Anhängerdeichsel ausgebildet ist. Im Träger 4 ist außerdem eine Bohrung 7 vorgesehen, in die ein im Kupplungskopf 3 verschiebbar gelagerter Sicherungsbolzen 8 eindringen kann. Dieser Sicherungsbolzen 8 kann den Träger 4 in der Kuppelstellung sichern, um ein Verlieren des Anhängers auszuschließen.

Am Träger 4 ist außerdem eine Nocke 9 vorgesehen, die von der eindringenden Kugelkalotte betätigt wird. Beim Eindrücken der Kugelkalotte in das Kupplungsmaul drückt diese gegen die Nocke 9 und verschwenkt dabei den Träger 4 entgegen dem Uhrzeigersinn. Hierdurch hebt sich der Kugelkopf 6 an und dringt in den Innenraum der Kugelkalotte ein. Auf diese Weise wird der Kupplungsvorgang ausgelöst.

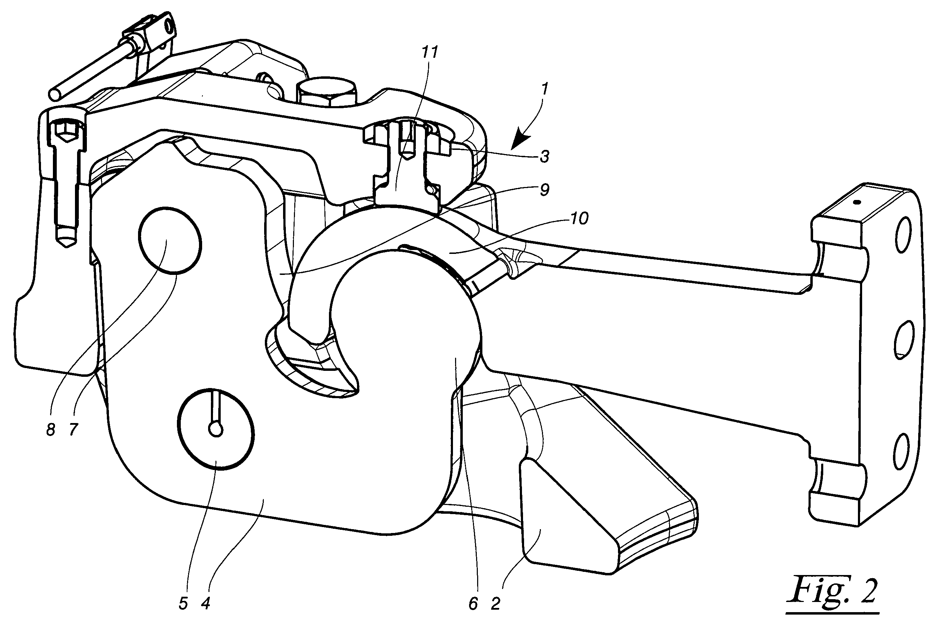

Die Anhängerkupplung 1 wird im Weiteren anhand der Schnittdarstellung gemäß Figur 2 erläutert. Diese Figur zeigt die Anhängerkupplung 1 in der Kuppelstellung mit gekuppelter Kugelkalotte 10. Dabei ist der Träger 4 so weit verschwenkt, dass die Kugelkalotte 10 den Kugelkopf 6 umgreift und sicher auf diesem abgestützt ist. Um zu vermeiden, dass der Träger 4 wieder in die in Figur 1 dargestellte Freigabestellung zurück verschwenkt wird, durchdringt der Bolzen 8 die Bohrung 7. Auf diese Weise wird der Träger 4 gegenüber jeglicher Schwenkbewegung arretiert.

Sowohl zur Sicherung der Kugelkalotte 10 gegenüber einer vertikalen Abhebebewegung als auch zur Verringerung des Spiels zwischen der Kugelkalotte 10 und dem Kugelkopf 6 ist im Kupplungskopf 3 ein Niederhalter 11 vorgesehen. Dieser Niederhalter 11 ist mittels eines Gewindes vertikal verstellbar, um Toleranzen bei der Kugelkalotte 10 auszugleichen. Durch Einstellen des Niederhalters 11 ist ein nahezu spielfreier Betrieb der Kugelkalotte 10 möglich.

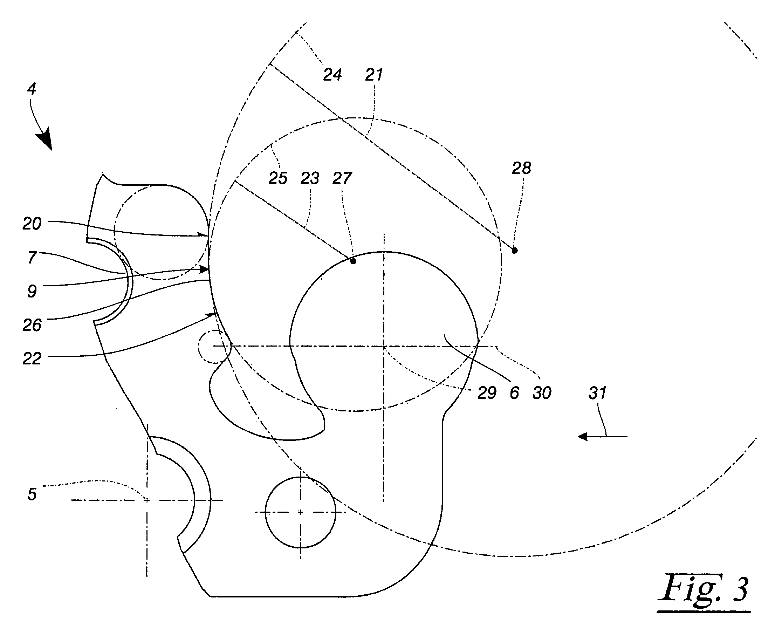

Da die Formgebung der Nocke 9 relativ kritisch ist, erfolgt die nähere Beschreibung der Nocke 9 anhand der Seitenansicht gemäß Figur 3. Die Nocke 9 weist in einem oberen Bereich 20 einen größeren Krümmungsradius 21 auf als in einem unteren Bereich 22 mit entsprechend kleinerem Krümmungsradius 23. Zur Verdeutlichung sind die beiden Krümmungskreise 24, 25 als strichpunktierte Linien eingezeichnet. Beide Krümmungskreise 24, 25 schneiden sich in einem Berührpunkt 26, der den oberen Bereich 20 vom unteren Bereich 22 trennt. Oberhalb des Berührpunktes 26 besitzt die Nocke 9 demnach den Krümmungsradius 21, unterhalb des Berührpunktes 26 dagegen den Krümmungsradius 23. Beide Bereiche 20, 22 gehen stetig differenzierbar ineinander über, so dass sich am Übergang nur die Krümmung, nicht jedoch die Steigung der Nocke 9 ändert.

Die beiden Krümmungskreise 24, 25 besitzen Krümmungsmittelpunkte 27, 28, die sich oberhalb einer durch den Kugelkopfmittelpunkt 29 gelegten Horizontalebene 30 befinden. Die horizontale Ausrichtung der Horizontalebene 30 liegt nur in der in der Figur 3 dargestellten Kuppelstellung vor. Der Krümmungsmittelpunkt 27 liegt dabei - in Fahrtrichtung 31 betrachtet - vor dem Kugelkopfmittelpunkt 29, während der Krümmungsmittelpunkt 28 dahinter liegt.

### Bezugszeichenliste

- 1: Anhängerkupplung
- 2: Kupplungsmaul
- 3: Kupplungskopf
- 4: Träger
- 5: Schwenkachse
- 6: Kugelkopf
- 7: Bohrung
- 8: Sicherungsbolzen
- 9: Nocke
- 10: Kugelkalotte
- 11: Niederhalter
- 20: oberer Bereich
- 21: Krümmungsradius
- 22: unterer Bereich
- 23: Krümmungsradius
- 24: Krümmungskreis
- 25: Krümmungskreis
- 26: Berührpunkt
- 27: Krümmungsmittelpunkt
- 28: Krümmungsmittelpunkt
- 29: Kugelkopfmittelpunkt
- 30: Horizontalebene
- 31: Fahrtrichtung

## Patentansprüche

1. Anhängerkupplung für ein Fahrzeug, insbesondere einen Ackerschlepper, wobei die Anhängerkupplung (1) einen Kugelkopf (6) aufweist, welcher eine Kugelkalotte (10) einer Deichsel eines Anhängers erfassen kann und der Kugelkopf (6) an einem zwischen einer Kuppelstellung und einer Lösestellung verstellbaren Träger (4) festgelegt ist, wobei der Träger (4) mit einer Nocke (9) fest verbunden ist, welche von der eindringenden Kugelkalotte (10) unter Mitnahme des Trägers (4) um eine Schwenkachse (5) verschwenkbar ist, um den Kugelkopf (6) in die Kuppelstellung zu verschwenken, **dadurch gekennzeichnet, dass** die Nocke (9) konkave Krümmungen aufweist, die im oberen Bereich (20) einen größeren Krümmungsradius (21) als im unteren Bereich (22) aufweisen.

2. Anhängerkupplung nach Anspruch 1, **dadurch gekennzeichnet, dass** der Krümmungsradius (23) der Nocke (9) im unteren Bereich (22) in etwa dem Außenradius der Kugelkalotte (10) entspricht.

3. Anhängerkupplung nach Anspruch 1 oder 2, **dadurch gekennzeichnet, dass** der Krümmungsradius (21) der Nocke (9) im oberen Bereich (20) zwischen dem 1,5-fachen und dem 2,5-fachen des Außenradius der Kugelkalotte (10) liegt.

4. Anhängerkupplung nach Anspruch 3, **dadurch gekennzeichnet, dass** der Krümmungsradius (21) der Nocke (9) im oberen Bereich (20) in etwa dem Doppelten des Außenradius der Kugelkalotte (10) entspricht.

5. Anhängerkupplung nach mindestens einem der Ansprüche 1 bis 4 oder nach dem Oberbegriff des Anspruchs 1, **dadurch gekennzeichnet, dass** Krümmungsmittelpunkte (27, 28) des unteren und oberen Bereichs (20, 22) der Nocke (9) - in Fahrtrichtung (31) betrachtet - in der Kuppelstellung auf verschiedenen Seiten eines Mittelpunkts (29) des Kugelkopfs (6) liegen.

6. Anhängerkupplung nach Anspruch 5, **dadurch gekennzeichnet, dass** die Krümmungsmittelpunkte (27, 28) des unteren und/oder oberen Bereichs (20, 22) in der Kuppelstellung oberhalb einer durch den Kugelkopfmittelpunkt (29) gehenden Horizontalebene (30) - betrachtet in der Kuppelstellung - liegen.

7. Anhängerkupplung nach mindestens einem der Ansprüche 1 bis 6 oder nach dem Oberbegriff des Anspruchs 1, **dadurch gekennzeichnet, dass** die Schwenkachse (5) von einem Mittelpunkt (29) des Kugelkopfs (6) einen Abstand aufweist, der zwischen dem 2,5-fachen und dem 3,5-fachen des Kugelkopfradius liegt.

8. Anhängerkupplung nach Anspruch 7, **dadurch gekennzeichnet, dass** der Abstand zwischen der Schwenkachse (5) und dem Kugelkopfmittelpunkt (29) in etwa dem Dreifachen des Kugelkopfradius entspricht.

9. Anhängerkupplung nach mindestens einem der Ansprüche 1 bis 8, **dadurch gekennzeichnet, dass** der Träger (4) federnd in Richtung der Lösestellung vorgespannt ist.

## Claims

1. Trailer coupling for a vehicle, in particular a tractor, wherein the trailer coupling (1) has a ball head (6) which can grasp a universal ball joint (10) of a drawbar of a trailer, and the ball head (6) is secured on a support (4) which is adjustable between a coupling position and a release position, wherein the support (4) is fixedly connected to a cam (9) which can be pivoted about a pivot axis (5) by the penetrating universal ball joint (10), with the support (4) being carried along, in order to pivot the ball head (6) into the coupling position, **characterized in that** the cam (9) has concave curvatures which have a larger radius of curvature (21) in the upper region (20) than in the lower region (22).

2. Trailer coupling according to Claim 1, **characterized in that** the radius of curvature (23) of the cam (9) in the lower region (22) approximately corresponds to the outer radius of the universal ball joint (10).

3. Trailer coupling according to Claim 1 or 2, **characterized in that** the radius of curvature (21) of the cam (9) in the upper region (20) is between 1.5 times and 2.5 times the outer radius of the universal ball joint (10).

4. Trailer coupling according to Claim 3, **characterized in that** the radius of curvature (21) of the cam (9) in the upper region (20) corresponds approximately to double the outer radius of the universal ball joint (10).

5. Trailer coupling according to at least one of Claims 1 to 4 or according to the preamble of Claim 1, **characterized in that** centre points of curvature (27, 28) of the lower and upper region (20, 22) of the cam (9) lie on different sides of a centre point (29) of the ball head (6) - as viewed in the direction of travel (31) - in the coupling position.

6. Trailer coupling according to Claim 5, **characterized in that**, in the coupling position, the centre points of curvature (27, 28) of the lower and/or upper region (20, 22) lie above a horizontal plane (30) passing through the centre point of the ball head (29) - as viewed in the coupling position.

7. Trailer coupling according to at least one of Claims 1 to 6 or according to the preamble of Claim 1, **characterized in that** the pivot axis (5) is at a distance which lies between 2.5 times and 3.5 times the ball head radius from a centre point (29) of the ball head (6).

8. Trailer coupling according to Claim 7, **characterized in that** the distance between the pivot axis (5) and the centre point of the ball head (29) corresponds approximately to three times the ball head radius.

9. Trailer coupling according to at least one of Claims 1 to 8, **characterized in that** the support (4) is prestressed resiliently in the direction of the release position.

## Revendications

1. Attelage pour un véhicule, notamment un tracteur, l'attelage (1) comportant une tête sphérique (6) pouvant comprendre une calotte sphérique (10) de barre de traction d'une remorque et la tête sphérique (6) étant fixée à un support (4) mobile entre une position de couplage et une position de desserrement, le support (4) étant relié fixement à une came (9) pouvant pivoter en partant de la calotte sphérique (10) pénétrante et en engrenant le support (4), autour d'un axe de pivotement (5), pour faire pivoter la tête sphérique (6) dans la position de couplage, **caractérisé en ce que** la came (9) comporte des coudes concaves comportant dans la région supérieure (20) un plus grand rayon de courbure (21) que dans la région inférieure (22).

2. Attelage selon la revendication 1, **caractérisé en ce que** le rayon de courbure (23) correspond à la came (9) dans la région inférieure (22), approximativement dans le rayon extérieur de la calotte sphérique (10).

3. Attelage selon la revendication 1 ou 2, **caractérisé en ce que** le rayon de courbure (21) de la came (9) se situe dans la région supérieure (20) entre 1,5 fois et 2,5 fois le rayon extérieur de la calotte sphérique (10).

4. Attelage selon la revendication 3, **caractérisé en ce que** le rayon de courbure (21) de la came (9) correspond, dans la région supérieure (20), approximativement au double du rayon extérieur de la calotte sphérique (10).

5. Attelage selon au moins l'une quelconque des revendications 1 à 4 ou selon le préambule de la revendication 1, **caractérisé en ce que** les points centraux de courbure (27, 28) de la région inférieure et supérieure (20, 22) de la came (9) se situent - dans la direction de conduite (31) - dans la position de couplage, sur différents côtés d'un point central (29) de la tête sphérique (6).

6. Attelage selon la revendication 5, **caractérisé en ce que** les points centraux de courbure (27, 28) de la région inférieure et/ou supérieure (20, 22) se situent dans la position de couplage au-dessus d'un plan horizontal (30) traversant le point central (29) de tête sphérique - dans la position de couplage.

7. Attelage selon au moins l'une quelconque des revendications 1 à 6 ou selon le préambule de la revendication 1, **caractérisé en ce que** l'axe de pivotement (5) présente une distance par rapport au point central (29) de la tête sphérique (6) situé entre 2,5 fois et 3,5 fois le rayon de la tête sphérique.

8. Attelage selon la revendication 7, **caractérisé en ce que** la distance entre l'axe de pivotement (5) et le point central de tête sphérique (29) correspond approximativement au triple du rayon de tête sphérique.

9. Attelage selon au moins l'une quelconque des revendications 1 à 8, **caractérisé en ce que** le support (4) est précontraint de façon élastique en direction de la position de desserrement.
